# EUROPEAN PATENT APPLICATION

(11) **EP 2 869 367 A1**
(43) Date of publication of application: **06.05.2015**
(21) Application number: 13808929.7
(22) Date of filing: 25.04.2013
(51) Int. Cl.: H01M 4/48, H01M 4/134, H01M 4/36, H01M 4/587

(54) **NEGATIVE ACTIVE MATERIAL FOR SECONDARY BATTERY, PROCESS FOR PRODUCING SAME, AND NEGATIVE ELECTRODE AND LITHIUM-ION BATTERY BOTH OBTAINED USING SAME**

(30) Priority: 27.06.2012 JP 2012144213
(71) Applicant: JNC Corporation, Chiyoda-ku Tokyo 100-8105 (JP); JNC Petrochemical Corporation, Tokyo 100-0004 (JP)
(72) Inventor: OHNO Katsuhiko, Ichihara-shi Chiba 290-8551 (JP); IWATANI Keizo, Ichihara-shi Chiba 290-8551 (JP); KIZAKI Tetsuro, Ichihara-shi Chiba 290-8551 (JP); KANAO Keiichiro, Ichihara-shi Chiba 290-8551 (JP); KONDO Masakazu, Ichihara-shi Chiba 290-8551 (JP)
(74) Representative: Thurston, Joanna
(86) International application number: PCT/JP2013/062173
(87) International publication number: WO 2014/002602

(57) **Abstract**

To relate to an anode active material for a secondary battery of a silicon oxide-based composite material and having high battery capacity and excellent charging and discharging characteristics and cycle characteristics, and a method for producing the same, and an anode and a lithium ion battery using the same.
To form the silicon oxide-based composite material having new structure as directly obtained by pyrolyzing polysilsesquioxane having specific structure under an inert gas atmosphere, and the formed silicon oxide-based composite material having scattering recognized in a region: 0.02 Å⁻¹ < q < 0.2 Å⁻¹ in a spectrum measured by a small-angle X-ray scattering method, having graphite carbon in which scattering is recognized at 1,590 cm⁻¹ (G band/graphite structure) and 1,325 cm⁻¹ (D band/amorphous carbon), and a peak intensity ratio (I_{D}/I_{G} ratio) of amorphous carbon to crystalline carbon being in a range of 2.0 to 5.0 in a spectrum measured by Raman spectroscopy, and being represented by a general formula SiOₓC_{y} (0.5 < x < 1.8, 1 < y < 5). The silicon oxide-based composite material is used as the anode active material, the anode is formed of the anode active material, and the lithium-ion secondary battery is formed using the anode.

## Description

### Technical Field

The present invention relates to an anode active material for a secondary battery demonstrating high capacity, excellent charging and discharging characteristics and cycle characteristics when the material is used as the anode active material for a lithium-ion secondary battery, and a method for producing the same, and an anode and a lithium-ion battery using the same.

More specifically, the invention relates to an anode active material containing a silicon oxide-based composite material obtained by heat-treating polysilsesquioxane under an inert gas atmosphere, in which the anode active material is recognized to contain the silicon oxide-based composite material containing Si, C and O by an elemental analysis, having carbon-silicon oxide nanodomain structure in which scattering is recognized in a region: 0.02 Å⁻¹ < q < 0.2 Å⁻¹ in a spectrum measured by a small-angle X-ray scattering method, having graphite carbon in which scattering is recognized at 1, 590 cm⁻¹ (G band/graphite structure) and 1, 325 cm⁻¹ (D band/amorphous carbon) and a peak intensity ratio (I_{D}/I_{G} ratio) of amorphous carbon to crystalline carbon is in a range of 2.0 to 5.0 in a spectrum measured by Raman spectroscopy, and being represented by a general formula SiOₓC_{y} (0.5 < x < 1.8, 1 < y < 5), and a method for producing the same, an anode using the same, and an anode and a lithium-ion battery containing the anode active material and having improved battery capacity and longevity.

### Background Art

In recent years, with rapid development of electronic equipment, communication equipment or the like, and development of technology on downsizing, various mobile equipment has been spreading. Further, as a power supply of the above mobile equipment, from a viewpoint of economical efficiency and downsizing and weight reduction of the equipment, development has been strongly desired for a secondary battery having high capacity and excellent longevity.

As such a small-sized and lightweight secondary battery having high capacity, a rocking chair lithium-ion battery has been developing nowadays and is generally put in practical use, in which a lithium intercalation compound emitting a lithium ion from intercalation is used as a cathode material, and a carbonaceous material typified by graphite or the like allowing storage and release (intercalation) of the lithium ion to intercalation between crystal faces during charge and discharge is used as anode material,.

A nonaqueous electrolyte secondary battery in which a lithium compound is used as an anode has high voltage and high energy density, and among the lithium compounds, lithium metal has often become objects of research in an early stage as an anode active material due to abundant battery capacity. However, when the lithium metal is used as the anode, a large amount of dendritic lithium precipitates on an anode lithium surface during charging the battery, and therefore charging and discharging efficiency may occasionally decrease, dendritic lithium may occasionally grow to cause short-circuiting with a cathode, or the lithium metal is sensitive to heat or shock to have a risk of explosion due to instability of the lithium itself, more specifically, high reactivity, and thus has become an obstacle to commercialization.

Consequently, as an anode active material to be used in place of such a lithium metal, a carbon-based anode storing and releasing lithium has come into common use.

The carbon-based anode has significantly contributed to solution of various problems of the lithium metal, and spread of the lithium-ion battery. As various kinds of mobile equipment have been gradually downsized, reduced in weight and improved in performance, achievement of high capacity of the lithium-ion secondary battery has emerged as an important issue.

The lithium-ion secondary battery using the carbon-based anode has a substantially low battery capacity due to porous structure of carbon. For example, even in the case where graphite having highest crystallinity as carbon is used, theoretical capacity is as low as 372 mAh/g in a composition of LiC₆. The capacity is only about 10% in comparison with 3,860 mAh/g of a theoretical capacity of the lithium metal. Consequently, research has been actively attempted again on introduction of metal such as lithium into an anode to improve battery capacity despite an existing problem of the metal anode.

As a typical attempt, study has been conducted on using as an anode active material a material mainly formed of metal that can be alloyed with lithium, such as Si, Sn and Al. The material that can be alloyed with lithium, such as Si and Sn, however, accompanies volume expansion during a reaction of alloying with lithium to produce fine powder of metallic material particles, and therefore involves problems of causing a decrease in contact among the metallic material particles to generate an electrically isolated active material in an electrode, causing detachment of the metallic material particles from the electrode to cause an increase in internal resistance and a decrease in capacity, resulting in degradation of cycle characteristics, or causing a serious electrolyte decomposition reaction by expansion of a specific surface area.

In order to solve the problems caused by use of such a metallic material, research has also been conducted on using, as a material of an anode active material, metal oxide having a relatively lower coefficient of volume expansion in comparison with the metal.

A proposal has been actually made for amorphous Sn-based oxide in which a size of Sn is minimized to prevent Sn from agglomeration caused during charge and discharge and to demonstrate an excellent capacity maintenance ratio (see Non-patent literature No. 1). The Sn-based oxide, however, has had a problem of inevitable occurrence of a reaction between lithium and an oxygen atom, and existence of irreversible capacity.

Moreover, an art is disclosed in which silicon oxide is used as an anode material of a lithium-ion secondary battery to obtain an electrode having high capacity (see Patent literature No. 1). In the above case also, however, irreversible capacity during initial charge and discharge has been large, and cycle characteristics have been insufficient for practical use.

Furthermore, a proposal has been made for a method using a pyrolyzed material of hydrogen silsesquioxane as a silicon oxide-based anode active material containing amorphous silicon oxide (see Patent literature No. 2, for example). According to the method, however, irreversible capacity during initial charge and discharge has been large, and also a carbon material has been required to be mixed to improve cycle characteristics, and the method has been insufficient for practical use.

Moreover, a proposal has been made for a method for obtaining a porous silicon-containing and carbon-based composite material as a battery material by combining an organic silicon compound such as polysilane and siloxane, and a silicon-free organic compound, and pyrolyzing the resulting mixture (see Patent literature No. 3, for example). The method, however, has allowed no development of sufficient characteristics of a silicon-based material, and has been insufficient in terms of capacity. Moreover, the method has been insufficient also as a production method for obtaining an electrode in view of productivity, because the method needs mixing of the silicon-containing compound and the silicon-free organic compound, or the like.

A request has still been made for a production method according to which such a problem of a conventional anode material is solved to develop an anode active material having high capacity and demonstrating excellent charging and discharging characteristic and cycle characteristics, and productivity is excellent.

### Citation List

### Patent Literature

Patent literature No. 1: JP H6-325765 A.
Patent literature No. 2: JP 2008-171813 A.
Patent literature No. 3: WO 2008/081883 A.

### Non-Patent Literature

Non-patent literature No. 1: J. Am. Ceram. Soc., 89 [7], 2188 (2006).

### Summary of Invention

### Technical Problem

The invention has been made in view of the problems described above, and an object thereof is to provide an anode active material containing a silicon oxide-based composite material that is effective as an anode for secondary battery having excellent charging and discharging capacity and an improved capacity maintenance ratio, has a specific peak in a small-angle X-ray scattering pattern, and simultaneously has a characteristic scattering pattern due to nanodomain structure in a spectrum measured by Raman spectroscopy, and to provide a method for producing the same, and an anode and a lithium-ion secondary battery using the same.

### Solution to Problem

In order to attain the object described above, the invention provides an anode active material containing a silicon oxide-based composite material obtained by heat-treating polysilsesquioxane (hereinafter, occasionally referred to as PSQ) under an inert gas atmosphere, in which the silicon oxide-based composite material contains Si, C and O by an elemental analysis, has carbon-silicon oxide nanodomain structure in which scattering is recognized in a region: 0.02 Å⁻¹ < q < 0.2 Å⁻¹ in a spectrum measured by a small-angle X-ray scattering method, has graphite carbon in which scattering is recognized at 1, 590 cm⁻¹ (G band/graphite structure) and 1, 325 cm⁻¹ (D band/amorphous carbon) and a peak intensity ratio (I_{D}/I_{G} ratio) of amorphous carbon to crystalline carbon is in a range of 2.0 to 5.0, in a spectrum measured by Raman spectroscopy, and is represented by a general formula SiOₓC_{y} (0.5 < x <1.8, 1 < y < 5).

Moreover, in order to attain the object, the invention provides an anode adopting the anode active material containing the silicon oxide-based composite material, and the invention provides a lithium secondary battery comprising at least a cathode, an anode and a nonaqueous electrolyte having lithium-ion conductivity, and a lithium-ion secondary battery having excellent charging and discharging capacity and an improved capacity maintenance ratio by using an anode in which the anode active material is used for the anode.

Further, in order to attain the object, the invention provides a method for producing the anode active material containing the graphite-containing silicon oxide-based composite material, comprising a step for heat-treating polysilsesquioxane in a temperature range of 200 to 2,000°C under an inert atmosphere, thereby allowing formation of a silicon oxide-based composite material having conductive graphite on a silicon oxide surface in one step with satisfactory yield and productivity.

The anode active material according to the invention includes an anode active material containing a silicon oxide-based composite material having new structure, as is different from a hitherto-known silicon oxide anode active material obtained from silicon dioxide or the like. Moreover, an anode and a lithium-ion secondary battery containing such an anode active material gives excellent charging and discharging capacity and cycle characteristics.

### Advantageous Effects of Invention

The invention can provide an anode active material containing a silicon oxide-based composite material having new structure as directly obtained from a pyrolyzed material by heat treatment of polysilsesquioxane.

### Brief Description of Drawings

Figure 1 shows an XRD pattern by X-ray diffractometry (XRD) with regard to a silicon oxide-based composite material produced in Examples.
Figure 2A shows a small-angle X-ray scattering pattern by a small-angle X-ray scattering measurement method with regard to heat-treated (pyrolyzed) octaphenyl silsesquioxane. Figure 2B shows a small-angle X-ray scattering pattern by a small-angle X-ray scattering measurement method with regard to a mixture of SiO₂ and carbon (C), and octaphenyl silsesquioxane subjected to heat treatment at 1,200°C.
Figure 3 shows a Raman spectrum by a Raman analysis method with regard to a silicon oxide-based composite material.
Figure 4 is a diagram showing a constitution example of a coin-type lithium-ion secondary battery.
Figure 5 shows a spectrum pattern by ²⁹Si-NMR(Nuclear Magnetic Resonance) measurement with regard to heat-treated octaphenyl silsesquioxane.

### Description of Embodiments

The invention will be described in more detail below.

### (Anode active material)

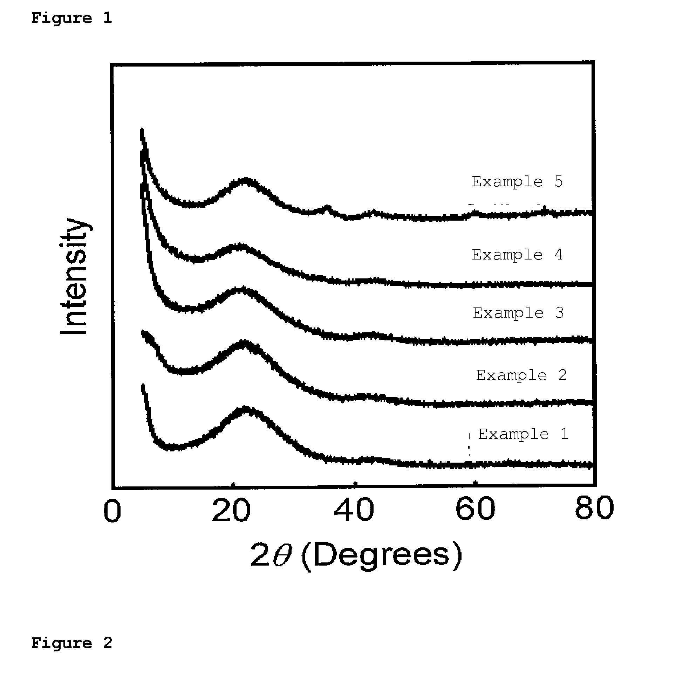

An anode active material containing a silicon oxide-based composite material according to the invention is produced by pyrolyzing polysilsesquioxane by heat treatment thereof, and the silicon oxide-based composite material of the invention shows an amorphous phase in which no crystalline peak exists according to a crystal structure analysis by X-ray diffractometry (XRD) shown in Figure 1.

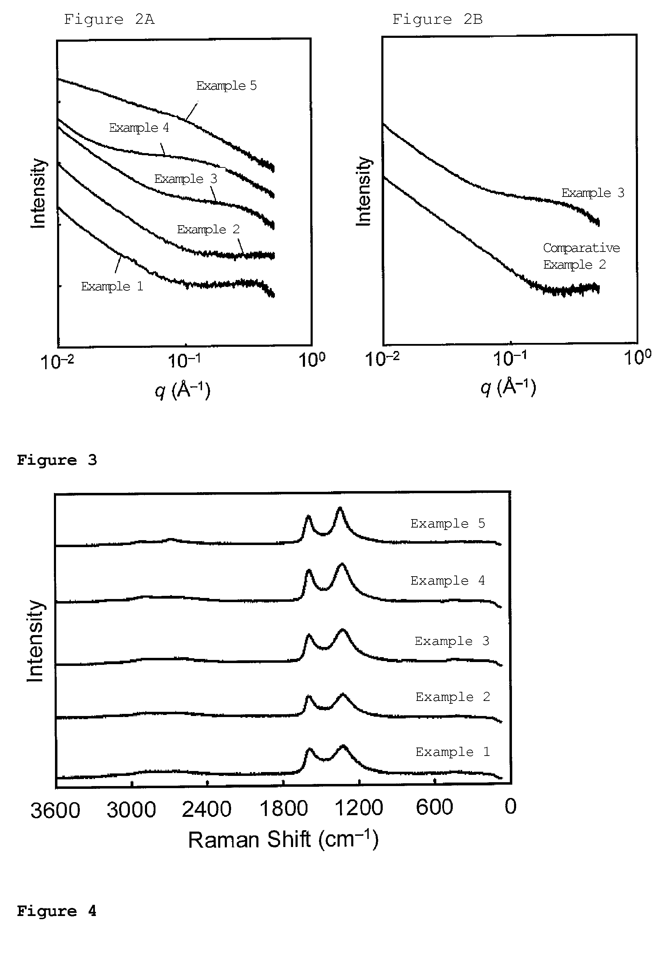

Moreover, when the silicon oxide-based composite material of the invention is measured by an elemental analysis, the material contains at least silicon (Si), carbon (C) and oxygen (O), and as is different from hitherto-known general silicon oxide, has scattering recognized in the range: 0.02 Å⁻¹ < q < 0.2 Å⁻¹ in a spectrum obtained by measuring a peak that appears in a low angle region of 10° or less in 2θ (2θ < 10°) by a small-angle X-ray scattering method as shown in Figure 2, and is presumed to have carbon-silicon oxide nanodomain structure having a diameter of inertia in a range of 1 to 3 nanometers.

If scattering q is in a range of 0.02 Å⁻¹ to 0.2 Å⁻¹, the material can take desired nanodomain structure to develop good characteristics according to the invention.

Further, as shown in Figure 3, in a spectrum measured by Raman spectroscopy with regard to a change in structure of a carbon material by a heat treatment temperature of the silicon oxide-based composite material according to the invention, formation of a graphite carbon material as carbon is recognized in which scattering is recognized at 1, 590 cm⁻¹ (G band/graphite structure) and 1, 325 cm⁻¹ (D band/amorphous carbon), and a peak intensity ratio (I_{D}/I_{G} ratio) of amorphous carbon to crystalline carbon is in a range of 2.0 to 5.0. Thus, the material has a graphite carbon solid in the silicon oxide-based composite material.

If the peak intensity ratio (I_{D}/I_{G} ratio) is in the range of 2.0 to 5.0, the crystalline carbon increases and the graphite carbon material develops without developing anisotropy in conductivity, and thus desired nanodomain structure is obtained and good conductivity is obtained.

From the above, the silicon oxide-based composite material of the invention is shown to be a composite material represented by a composition formula: SiOₓC_{y} (0.5 < x < 1.8, 1 < y < 5), and is presumed to include nanodomain structure coated with carbon and having a diameter of about 1 to 3 nanometers.

If x is in a range of 0.5 to 1.8, as the silicon oxide-based composite material, an amorphous silicon oxide component from which the nanodomain structure is obtained is easily produced, and sufficient battery capacity is obtained. If y is in a range of 1 to 5, graphite is moderately developed, a balance between the conductivity and the battery capacity is satisfactory, and sufficient conductivity and high battery capacity are obtained.

Further, the silicon oxide-based composite material of the invention desirably has scattering recognized in the range: 0.02 Å⁻¹ < q < 0.2 Å⁻¹ in the spectrum as measured by the small-angle X-ray scattering method. If scattering q is in the above range, nanodomain structure having a desired size is obtained, and when the material is formed into a battery, sufficient cycle characteristics are obtained.

Furthermore, the material represented by general formula: SiOₓC_{y} (0.5 < x <1.8, 1 < y < 5) is further desired, wherein the material has graphite carbon in which scattering is recognized at 1,590 cm⁻¹ (G band/graphite structure) and 1,325 cm⁻¹ (D band/amorphous carbon), and the peak intensity ratio (I_{D}/I_{G} ratio) of amorphous carbon to crystalline carbon is in the range of 2.0 to 5.0 in the spectrum measured by Raman spectroscopy.

The invention gives the anode active material containing the silicon oxide-based composite material having the nanodomain structure coated with graphite carbon formed by pyrolyzing PSQ by heat treatment.

### (Method for producing an anode active material containing a silicon oxide-based composite material)

The silicon oxide-based composite material can be produced, comprising a step for directly pyrolyzing polysilsesquioxane by heat treatment in the temperature range of 200°C to 2,000°C under an inert atmosphere.

Polysilsesquioxane can be represented by the general formula (1) below. 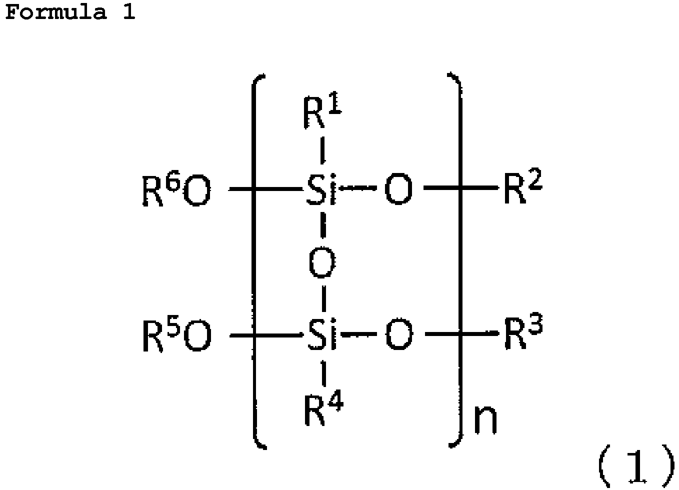 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene. In alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.

R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-. In alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-. Then, n represents an integer of 1 or more.
"Halogen" herein represents fluorine, chlorine, bromine, iodine, or the like, and above all, fluorine or chlorine is preferred.

The polysilsesquioxane desirably has at least one of structure selected from chemical formula (2), chemical formula (3) or chemical formula (4), or complex structure thereof below.

The polysilsesquioxane has cage structure (2), ladder structure (3) or random structure (4), or mixed structure thereof below in more detail.

After heat treatment, however, the polysilsesquioxane is converted into nanodomain structure coated with carbon in the silicon oxide-based composite material.

Polysilsesquioxane having the cage structure of general formula compound (2) is as described below. 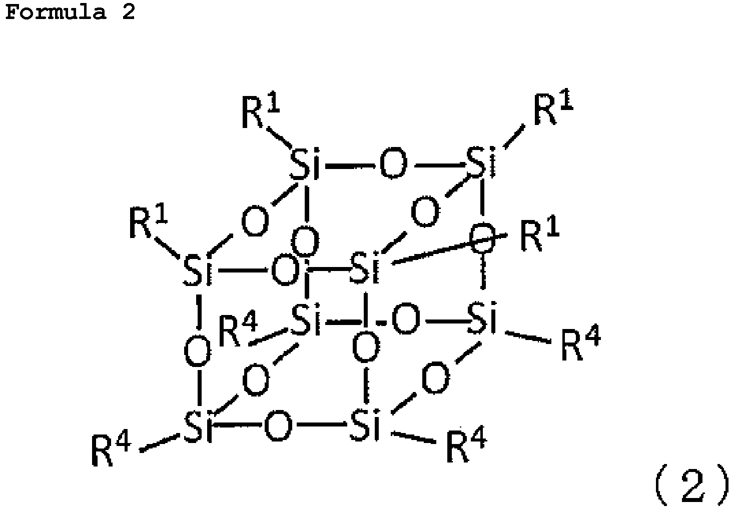 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene. In alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.

Specificpreferredexamples (6) to (11) of general formula compound (2) are shown below. The invention is not limited to the compounds. In the formulas herein, Me represents a methyl group, Ph represents a phenyl group and Naphthyl represents a naphthyl group.

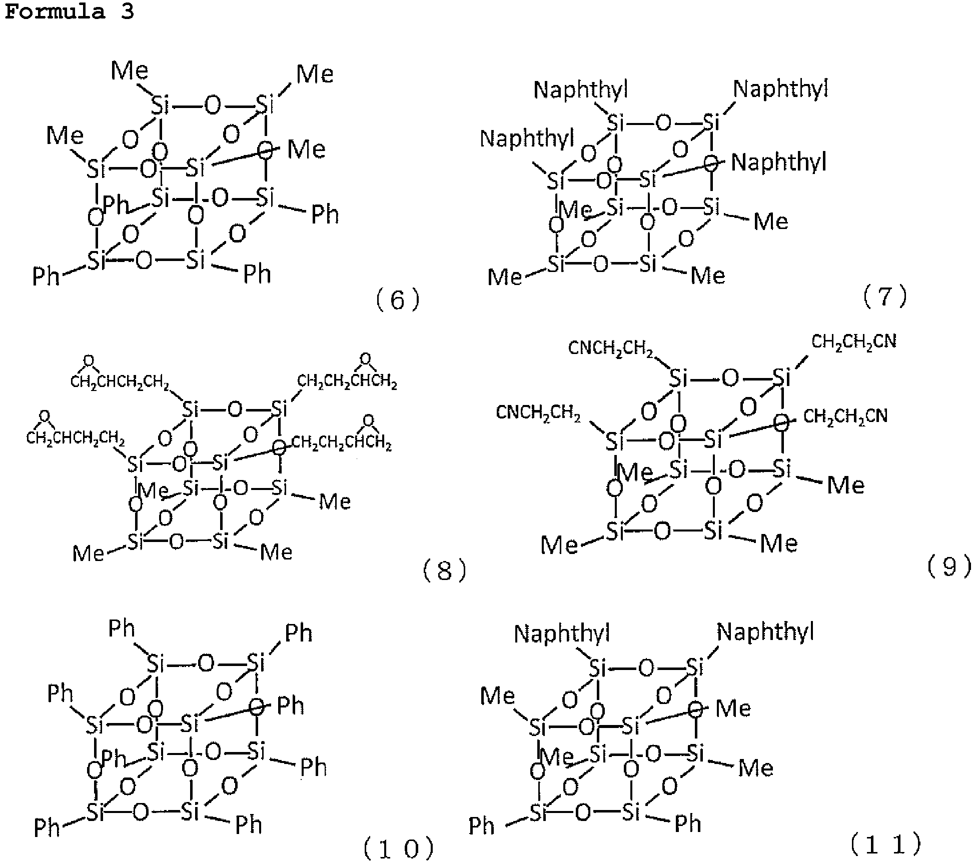

Polysilsesquioxane having the ladder structure of general formula compound (3) is as described below. 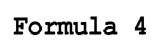 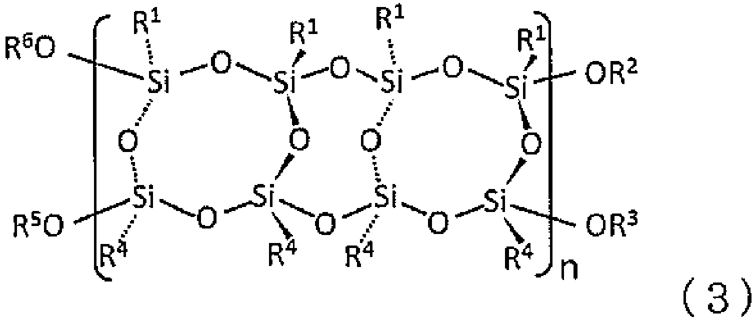 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene. In alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.

R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-. In alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-. Then, n represents an integer of 1 or more.

Specific examples of general formula compound (3) include a compound described in each of WO 2003/024870 A and WO 2004/081084 A.

Specific preferred examples (12) to (14) are shown below. The invention is not limited to the compounds. In the formulas herein, Me represents a methyl group and Ph represents a phenyl group.

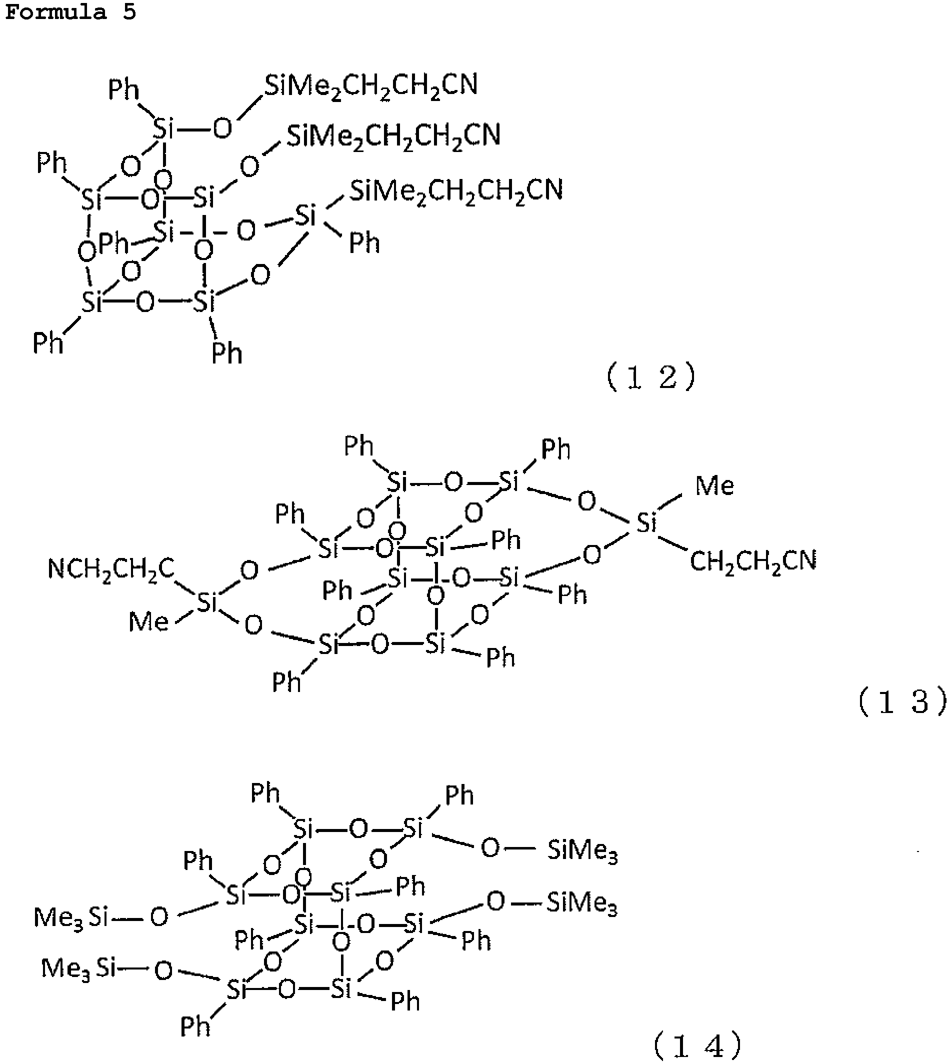

Polysilsesquioxane having the random structure of general formula compound (4) is as described below. 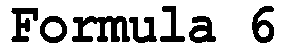 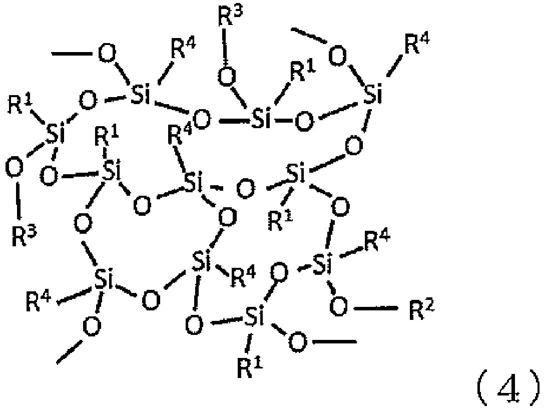 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene. In alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.

R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-. In alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-.

The polysilsesquioxane used in the invention is a material having a low dielectric constant, and when a sol-gel reaction is used, a mesoporous material having microporosity of a fixed size can also be produced, and has often become objects of research as an insulator of a semiconductor. In the invention, an anode active material containing a new silicon oxide-based composite material can also be produced as directly obtained by heat-treating the polysesquioxane in the temperature range of 200°C to 2,000°C under the inert atmosphere.

In the invention, the polysilsesquioxane used for production of the anode active material containing the silicon oxide-based composite material is desirably obtained by carrying out the sol-gel reaction of a silane compound. The sol-gel reaction of the silane compound includes a reaction in which a low-molecular-weight silane compound is subjected to a hydrolysis or condensation reaction under suitable conditions, thereby obtaining sol in which inorganic particles being significantly stable and having uniform structure are dispersed, or the inorganic particles.

In the invention, polysilsesquioxane represented by general formula (1) is obtained by the sol-gel reaction of the silane compound. 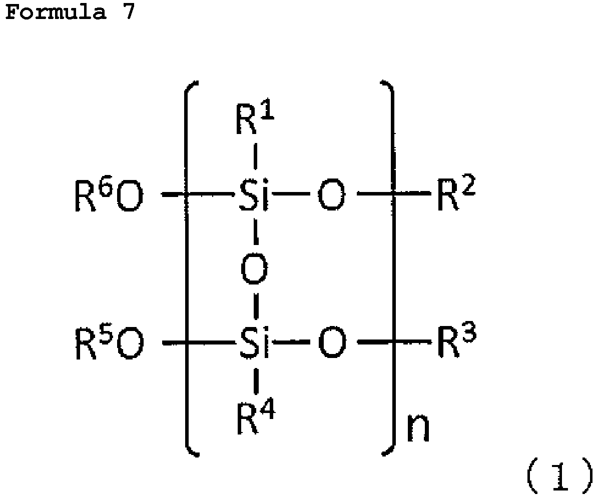 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene. In alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.

R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-. In alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-. Then, n represents an integer of 1 or more.

In the formulas (2), (3) and (4), R¹ and R⁴ each are a group selected from the group of substituted or unsubstituted alkyl having 1 to 45 carbons, the group of substituted or unsubstituted aryl and the group of substituted or unsubstituted arylalkyl, and specifically, preferably, aromatics such as a phenyl group and a naphthyl group, halogen, or C1 to C5 alkyl groups, and further preferably, aromatics such as a phenyl group and a naphthyl group.

Moreover, in the invention, as the polysilsesquioxane, a product obtained by allowing the sol-gel reaction of the silane compound represented by general chemical formula (5) below in the presence of an acid catalyst can be used:

R¹⁰Si(R⁷)(R⁸)(R⁹) (5)

wherein, in the formula (5), R⁷, R⁸ and R⁹ are each independently hydrogen, halogen, a hydroxyl group or an alkyloxy group having 1 to 4 carbons. A methyl group, an ethyl group or the like is particularly preferred. Among the groups, trichlorosilane, trimethoxysilane or triethoxysilane is particularly desired. R¹⁰ is a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene. In alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.

In the invention, a substituent of a substituted alkyl group in the general chemical formula (5) is preferably halogen, C1 to C10 alkyl groups, C2 to C10 alkenyl groups, C1 to C5 alkoxy groups, a phenyl group, a naphthyl group or the like.

When the polysilsesquioxane is pyrolyzed in the invention, a surface of silicon oxide in the silicon oxide-based composite material is coated with a carbon component formed of a carbon source (R¹ to R¹⁰) contained in the polysilsesquioxane, and therefore new addition of a carbon precursor as a conductive auxiliary material is unnecessary, but within the range in which advantageous effects of the invention are not lost, the carbon precursor is mixed together with the polysilsesquioxane and subjected to heat treatment, thereby allowing adjustment or control of an amount of carbon-based coating for coating the silicon oxide-based composite material to form a coated product. When the carbon precursor is mixed, the carbon precursor can be added in an amount of 10 to 90% by weight based on the total weight of the mixture.

If the amount is within the range of the content, energy density is satisfactory, and an amount of carbon remaining after a carbonization reaction becomes sufficient, and good characteristics are obtained.

The carbon precursor preferably includes petroleum pitch, coal tar pitch, sucrose, a phenolic resin, an epoxy resin, furfuryl alcohol, polyvinyl chloride and polyvinyl alcohol.

Moreover, a carbonaceous material used as an electrode active material or an electrically conductive material in a conventional lithium-ion secondary battery, such as graphite powder and carbon black (acetylene black, furnace black, ketjen black) can be used alone or in combination thereof in place of the carbon precursor.

### (Anode)

The invention provides an anode and a lithium-ion secondary battery in which the anode active material is adopted.

Specifically, the anode of the invention is produced, including the anode active material containing the silicon oxide-based composite material.

The anode may be produced by heat-treating and pyrolyzing various kinds of PSQ according to the invention, and shaping an anode mixed material containing a formed anode active material and a binder into a predetermined shape, or produced by a method for applying the anode mixed material onto a collector such as copper foil. A method for shaping the anode is not particularly limited, and a publicly known method can be applied.

More specifically, as is ordinarily applied, an anode material composition containing the anode active material containing the silicon oxide-based composite material, the binder and, when necessary, the electrically conductive material or the like according to the invention is prepared, and the above composition is directly coated onto a collector in the form of a rod, a plate, foil or a net, or the anode material composition is separately cast on a support, and an anode active material film peeled off from the support is laminated on a collector to obtain an anode electrode plate. Moreover, the anode of the invention is not limited to the forms listed described above, and can be used in a form other than the forms listed above.

The battery essentially charges and discharges a large amount of current for achieving high capacity, and for the purpose, a material having low electric resistance of an electrode is required. Therefore, in order to reduce resistance of the electrode, various kinds of electrically conductive materials are generally added, and specific examples of a conductive auxiliary material to be mainly used include an electrically conductive material such as carbon black and graphite fine particles.

As the binder, any of binders generally used in the secondary battery can be used, and specific examples include a vinylidene fluoride-hexafluoropropylene copolymer, polyvinylidene fluoride (PVDF), polyacrylonitrile, polymethylmethacrylate, polytetrafluoroethylene and a mixture thereof, and a styrene-butadiene-rubber-based polymer.

### (Lithium-ion secondary battery)

The lithium-ion secondary battery of the invention has features of being produced including the anode. The lithium-ion secondary battery of the invention can be produced as described below.

First, a cathode active material composition is arranged by mixing a cathode active material allowing reversible storage and release of Li, an electrically conductive auxiliary material, a binder and a solvent. The cathode active material composition is directly coated on a metal collector and dried to arrange a cathode plate in a manner similar to the anode, as is ordinarily applied.

The cathode active material composition is separately cast on a support, and then a film obtained by being peeled off from the support is laminated on the metal collector to allow production of the cathode. A method for shaping the cathode is not particularly limited, and a publicly known method can be applied.

As the cathode active material, any material can be used as long as the material is lithium-containing composite metal oxide, and generally used in the field of the secondary battery. Specific examples include LiCoO₂, LiMnₓO₂ₓ, LiNiₓ₋₁MnₓO₂ₓ (x = 1, 2) and Li_{1-x-y}CoₓMn_{y}O₂ (0 ≤ x ≤ 0.5, 0 ≤ y ≤0.5) Specific examples of the composite oxide include LiMn₂O₄, LiCoO₂, LiNiO₂ and LiFeO₂. Moreover, V₂O₅, TiS, MoS and so forth being a compound allowing oxidation-reduction of lithium can also be used.

As the electrically conductive auxiliary material, carbon black, graphite fine particles or the like is used, as the binder, a vinylidene fluoride-hexafluoropropylene copolymer, polyvinylidene fluoride (PVDF), polyacrylonitrile, polymethylmethacrylate, polytetrafluoroethylene and a mixture thereof or a styrene-butadiene-rubber-based polymer can be used, and as the solvent, N-methylpyrrolidone, acetone, water or the like is used.

On the above occasion, a content of the cathode active material, the electrically conductive auxiliary material, the binder and the solvent is adjusted to an amount that can be generally used in the lithium-ion secondary battery.

As a separator to be interposed between the cathode and the anode, any material can be used as long as the material is generally used in the lithium-ion secondary battery. A material having lower resistance to ion migration in an electrolyte or excellent electrolyte impregnation ability is particularly preferred. Specifically, the material is selected from a glass fiber, polyester, Teflon (registered trademark), polyethylene, polypropylene, polytetrafluoroethylene (PTFE) and a compound thereof, and may be in the form of a nonwoven fabric or a woven fabric.

More specifically, in the case of the lithium-ion secondary battery, a windable separator formed of a material such as polyethylene and polypropylene is used; and in the case of a lithium-ion polymer battery, a separator having excellent organic electrolyte impregnation ability is used, but a method for shaping such a separator is not particularly limited, and a publicly known method can be applied. For example, the separator can be produced by the method described below.

More specifically, a polymer resin, a filler and a solvent are mixed to arrange a separator composition, and then the separator composition is directly coated on an upper part of an electrode and dried, thereby forming a separator film, or the separator composition is cast on the support and dried, and then a separator film peeled off from the support can be laminated on the upper part of the electrode, thereby allowing formation of the separator.

The polymer resin is not particularly limited, and any material used for the binder of the electrode plate can be used. For example, a vinylidene fluoride-hexafluoropropylene copolymer, polyvinylidene fluoride, polyacrylonitrile, polymethylmethacrylate, a mixture thereof or the like can be used.

As the electrolyte, a material can be used in which, in a solvent of propylene carbonate, ethylene carbonate, diethylene carbonate, ethyl methyl carbonate, methyl propyl carbonate, butylene carbonate, benzonitrile, acetonitrile, tetrahydrofuran, 2-methyltetrahydrofuran, γ-butyrolactone, dioxolane, 4-methyl dioxolane, N,N-dimethylformamide, dimethylacetamide, dimethyl sulfoxide, dioxane, 1,2-dimethoxyethane, sulfolane, dichloroethane, chlorobenzene, nitrobenzene, dimethyl carbonate, methyl isopropyl carbonate, ethyl propyl carbonate, dipropyl carbonate, dibutyl carbonate, diethylene glycol or diethyl ether or a mixed solvent thereof, one kind of, or a mixture of two or more kinds of electrolytes including a lithium salt such as LIPF₆, LiBF₄, LiSb₆, LiAsF₆, LiClO₄, LiCF₃SO₃, Li (CF₃SO₂)₂N, LiC₄F₉SO₃, LiSbF₆. LiAlO₄, LiAlCl₄, LiN(CₓF₂ₓ₊₁SO₂) (C_{y}F_{2y+1}SO₂) (wherein, x is a natural number), LiCl and LiI are dissolved and used.

The separator is disposed between the cathode plate as described above and an anode plate to form a battery structure. If such a battery structure is wound or folded and put into a cylindrical battery case or a rectangular battery case, and then an organic electrolyte according to the invention is injected thereinto, the lithium-ion secondary battery is completed.

Moreover, if the battery structure is laminated into bicelle structure, and then the resulting material is impregnated with the organic electrolyte and the resulting product is put into a pouch and sealed, the lithium-ion polymer battery is completed.

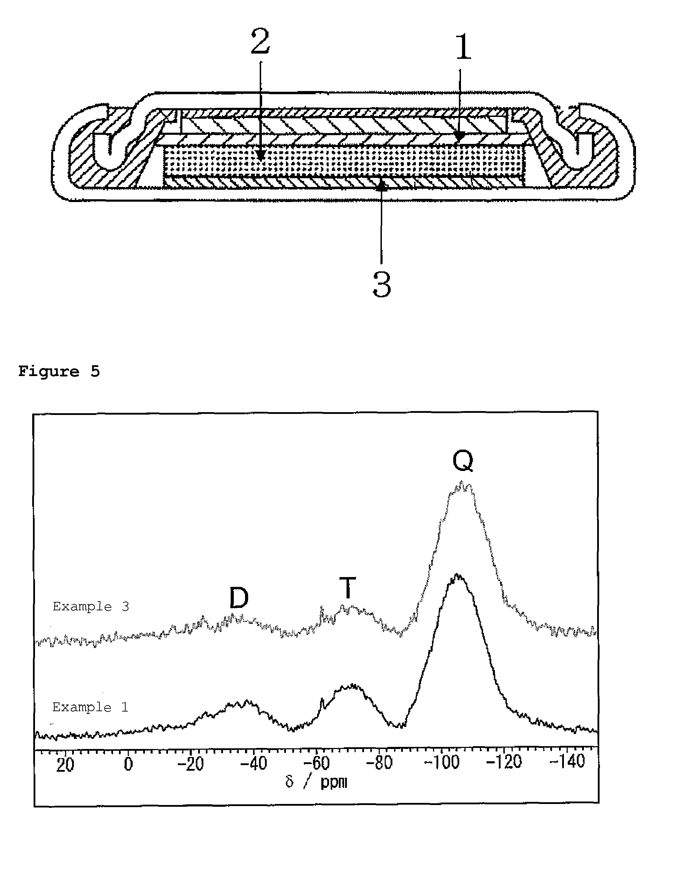

The silicon oxide-based composite material formed by pyrolyzing the polysilsesquioxane by heat-treating the same according to the invention is, as found out from Figure 1, shown to be in an amorphous phase in which no crystalline peak is confirmed by an X-ray diffraction experiment, in contrast to hitherto-known general silicon oxide. As shown in Figure 2, the material has scattering recognized in the range: 0.02 Å⁻¹ < q < 0.2 Å⁻¹ in the spectrum measured by the small-angle X-ray scattering method, and is presumed to include the nanodomain structure having the diameter of inertia in the range of nanometers. As shown in Figure 3, formation of the graphite carbon solid is recognized in silicon oxide in the spectrum measured by Raman spectroscopy, and elemental analysis values represent general formula SiOₓC_{y} (0.5 < x < 1.8, 1 < y < 5). Further, as shown in Figure 5, absorption at -38 ppm (SiO₂C₂) and at 70 ppm (SiO₃C) based on a Si-C bond is recognized in a ²⁹Si-NMR spectrum, and thus the material is thought to have the nanodomain structure coated with carbon and having a diameter about 1 to 3 nanometers, and therefore allow exhibition of relatively excellent lithium storage and release characteristics.

### Examples

The invention will be more specifically described by presenting Examples and Comparative Examples below, but the invention is not limited to the Examples.

In the present Examples, various kinds of analyses and evaluations were conducted on silicon oxide-based composite materials, silicon dioxide or the like prepared in Example 1 to Example 5, and Comparative Examples 1 and 2.

In addition, in the formulas, Ph represents a phenyl group and Me represents a methyl group.

Moreover, measuring devices and measuring methods in "measurement by X-ray diffractometry," "measurement by elemental analysis," "measurement by laser-Raman spectroscopy," and "measurement by a small-angle X-ray scattering method," and "evaluation of battery characteristics" in each of Examples and Comparative Examples are as described below.

### (Measurement by X-ray diffractometry)

Measurement of X-ray diffraction was carried out using D8 Discover, made by Bruker AXS K.K., as an X-ray diffractometer, under conditions of X-rays: CuKα-ray (λ = 1.54 Å), tube voltage: 45 kV, tube current: 360 mA, 2θ = 5 to 80, incident side: 0.4 mm slit, and light-receiving side: Soller slits, according to a capillary method.

### (Elemental analysis)

A CHN elemental analysis was conducted using NCH-21 model, made by Sumika Chemical Analysis Service, Ltd., as a carbon, hydrogen and nitrogen element analyzer, according to oxygen combustion with circulation and a TCD detection system, an oxygen elemental analysis was conducted, using EMGA-2800, made by HORIBA, Ltd., as an oxygen element analyzer, according to a high-temperature carbon reaction and NDIR detection system, and a Si elemental analysis was conducted using SPS4000, made by SEIKO Electronics industrial Co., Ltd., as a silicon element analyzer, according to ashing-alkaline melting-acid dissolution and inductively coupled plasma spectrometry, respectively.

### (Measurement by laser Raman spectroscopy)

Measurement by Raman spectrometry was carried out using NRS-3100, made by JASCO Corporation, as a laser Raman-spectrometry analyzer, under conditions of laser wavelength: 532 nm, objective lens: magnification of 50 times (long focus type), laser intensity: 0.1 to 1 mW, exposure time: 100 seconds, and the number of cumulation: once.

### (Measurement by small-angle X-ray diffractometry)

Measurement was carried out using D8 Discover, made by Bruker AXS K.K., as a small-angle X-ray diffractometry analyzer, under conditions: X-ray generator: target Cu, tube voltage: 45 kV, tube current: 360 mA, 2θ = 0 to 7°, incident side: 0.4 mm slit, and light-receiving side: 0.1 mm slit + Ni filter + 0.05 mm slit, according to a capillary method.

### (Measurement of ²⁹Si solid NMR)

DDMAS (Dipolar Decoupled Magic Angle Spinning) measurement was carried out using 500 MHz NMR System (VARIAN NMR SYSTEM), made by Varian Technologies Japan Limited, as a ²⁹Si solid NMR measuring device. The number of rotations was adjusted to 8 kHz and a pulse waiting time to 10 seconds, and polydimethylsilane (-34.44 ppm) was used as an external reference.

### (Evaluation of battery characteristics)

Charging and discharging characteristics of a lithium-ion secondary battery including an anode using an anode active material containing a silicon oxide-based composite material according to the invention were measured as described below.

Measurement of both charge and discharge was carried out at a constant current using HJR-110mSM, HJ1001SM8A or HJ1010mSM8A, made by HOKUTO DENKO Corporation. On the occasion, a current value was adjusted to 0. 05 C to be 1/20 based on 370 mAh being theoretical capacity of graphite per a weight of 1 g of silicon oxide-based composite material.

Moreover, charge was evaluated in terms of capacity until a battery voltage decreased to 0 V, and discharge was evaluated in terms of capacity until a cell voltage reached 3 V. During switching in each charge and discharge, discharge was made in an open circuit for 30 minutes.

Cycle characteristics were also measured under similar conditions. At the current value, however, a long period of time was needed in one cycle upon using the anode active material containing the silicon oxide-based composite material according to the invention. Consequently, measurement was carried out by gradually increasing a current value from 0.05 C to 3.0 C in a part of Examples.

Moreover, reversible capacity was taken as initial discharging capacity, an initial charging and discharging ratio was taken as a ratio of discharging capacity to charging capacity in a first cycle, and a capacity maintenance ratio after a cycle test was expressed using charging capacity after a cycle to an amount of initial charge.

### (Preparation of silicon oxide-based composite material precursor)

### (Synthesis Example 1)

### Synthesis of octaphenyl silsesquioxane (10)

In a 1,000 mL four-necked flask, 360 mL of toluene (Wako Pure Chemical Industries, Ltd.), 42.2 g (37% TBAH in MeOH) of tetrabutylammonium hydroxide (Tokyo Chemical Industry Co., Ltd.) and 16.2 g of pure water were put, and the resulting mixture was stirred and cooled in an ice bath. Into a 500 mL dropping funnel, 360 mL of diethyl ether (Wako Pure Chemical Industries, Ltd.) and 118.9 g of phenyltrimethoxysilane (Tokyo Chemical Industry Co., Ltd.) were charged, and the resulting mixture was added dropwise in 5 minutes. After dropwise addition, the ice bath was removed, and the resulting mixture was stirred at room temperature for 70 hours. After 70 hours, filtration was conducted using a filter press.

Powder obtained was transferred to a beaker, washed with toluene, and again, pressure filtration was conducted. After filtration, the resulting material was dried under reduced pressure at 120°C for 6 hours by a vacuum drier to give 14.3 g of octaphenyl silsesquioxane (10).

### (Synthesis Example 2)

### Synthesis of (PhSiO_{3/2})ₙ

In a 500 mL four-necked flask, 99.1 g of phenyltrimethoxysilane (Tokyo Chemical Industry Co., Ltd.) and 16 g of methanol (Wako Pure Chemical Industries, Ltd.) were put. While the resulting mixture was stirred at room temperature, 1.36 g of 1N HCl was slowly added dropwise in 30 minutes from a dropping funnel. After completion of dropwise addition, the resulting mixture was heated and stirred at 60°C for 2 hours. After 2 hours, the resulting mixture was cooled and 200 g of toluene (Wako Pure Chemical Industries, Ltd.) was added dropwise thereto.

Then, a reaction mixture was transferred to a 500 mL separating funnel. The mixture was washed with saturated brine, and then washed with saturated sodium hydrogencarbonate water, further washed with saturated brine twice, and finally washed with pure water twice. After washing with water, the resulting mixture was dehydrated over magnesium sulfate (Wako Pure Chemical Industries, Ltd.). The liquid was transferred to a separable flask, a solvent was distilled off, and the resulting material was heated under reduced pressure to give (PhSiO_{3/2})ₙ.

### Example 1

### (Preparation of silicon oxide-based composite material)

On a boat made from alumina of a SSA-S grade, 15.0 parts by weight of octaphenyl silsesquioxane (10) were placed, and then the boat was set in a vacuum purge-type tube furnace KTF43N1-VPS (made by Koyo Thermo System Co., Ltd.), and as heat treatment conditions, temperature was increased at a rate of 4°C/min and pyrolysis was made at 1,000°C for 1 hour while Ar was supplied at a flow rate of 200 mL/min under an argon atmosphere (high purity argon 99.999%) to give a silicon oxide-based composite material.

Subsequently, the resulting silicon oxide-based composite material was ground for about 3 hours in atmospheric air using a ball mill made from zirconia, and classification was made using a 32 micrometer sieve made from stainless steel to give particulate silicon oxide-based composite material (15) having a maximum powder diameter of 32 micrometers.

An X-ray diffraction pattern, a small-angle X-ray scattering pattern, and the results of measurement by laser Raman spectroscopy of the silicon oxide-based composite material obtained are shown in Figures 1, 2 and 3, respectively. Moreover, the results of elemental analysis of the silicon oxide-based composite material obtained are shown in Table 1.

### (Fabrication of anode body)

To 100 parts by weight of silicon oxide-based composite material (15), 12.5 parts by weight of acetylene black were added, and the resulting mixture was mixed for 15 minutes using a stirrer in a flask, and then 12.5 parts by weight of polyvinylidene fluoride were added thereto, and further mixed for 15 minutes. Then, as a solvent, N-methyl-2-pyrrolidone was mixed therein to form slurry. Then, the slurry was coated on a copper foil roll at a thickness of 100 micrometers by a doctor blade method.

After coating, the resulting coat was air-dried for 30 minutes, and then dried on a hot plate at 80°C for 90 minutes. After drying, an anode sheet was pressed using a 2 t small-size precise roll press (made by THANK METAL Co., Ltd.). After pressing the sheet, an electrode was prepared by punching the sheet using a 14.50 mm-diameter electrode punch HSNG-EP, and dried at 80°C under reduced pressure for 12 hours or more in a glass tube oven GTO-200 (SIBATA), and thus an anode body was fabricated.

### (Fabrication and evaluation of lithium-ion secondary battery)

A 2032-type coin battery having structure shown in Figure 4 was fabricated. As cathode 3, metal lithium was used, as separator 2, a microporous polypropylene film was used, as anode 1, the anode body was used, and as an electrolyte, a mixed solvent of ethylene carbonate and diethyl carbonate (1 : 1) (volume ratio) into which LiPF₆ was dissolved at a ratio of 1 mol/L was used.

Subsequently, characteristics of a lithium-ion secondary battery were evaluated. As a charge and discharge tester, BTS2005W made by NAGANO Co., Ltd. was used. As charging and discharging conditions, both charge and discharge were performed at 0.05 C at a constant current, and a discharge cut-off voltage was set to 1 mV and a charging cut-off voltage was set to 1,500 mV.

The results are shown in Table 1.

### Example 2

Silicon oxide-based composite material (17) was obtained in a manner similar to the operations in Example 1 except that a silicon oxide-based composite material precursor obtained in Synthesis Example 2 was used in place of octaphenyl silsesquioxane in preparation of the silicon oxide-based composite material.

An X-ray diffraction pattern, a small-angle X-ray scattering pattern, and the results of measurement by laser Raman spectroscopy of silicon oxide-based composite material (17) obtained are shown in Figures 1, 2 and 3, respectively. Moreover, the results of elemental analysis of silicon oxide-based composite material (17) obtained are shown in Table 1.

### Example 3

Silicon oxide-based composite material (18) was obtained in a manner similar to the operations in Example 1 except that pyrolysis temperature in heat treatment was changed to 1,200°C in preparation of the silicon oxide-based composite material.

An X-ray diffraction pattern, a small-angle X-ray scattering pattern, and the results of measurement by laser Raman spectroscopy of silicon oxide-based composite material (18) obtained are shown in Figures 1, 2 and 3, respectively. Moreover, the results of elemental analysis of silicon oxide-based composite material (18) obtained are shown in Table 1.

### Example 4

Silicon oxide-based composite material (19) was obtained in a manner similar to the operations in Example 1 except that pyrolysis temperature in heat treatment was changed to 1,300°C in preparation of the silicon oxide-based composite material.

An X-ray diffraction pattern, a small-angle X-ray scattering pattern, and the results of measurement by laser Raman spectroscopy of silicon oxide-based composite material (19) obtained are shown in Figures 1, 2 and 3, respectively. Moreover, the results of elemental analysis of silicon oxide-based composite material (19) obtained are shown in Table 1.

### Example 5

Silicon oxide-based composite material (20) was obtained in a manner similar to the operations in Example 1 except that pyrolysis temperature in heat treatment was changed to 1,400°C in preparation of the silicon oxide-based composite material.

An X-ray diffraction pattern, a small-angle X-ray scattering pattern, and the results of measurement by laser Raman spectroscopy of silicon oxide-based composite material (20) obtained are shown in Figures 1, 2 and 3, respectively. Moreover, the results of elemental analysis of silicon oxide-based composite material (20) obtained are shown in Table 1.

### Comparative Example 1

### (Preparation of silicon oxide (SiOₓ))

### Synthesis of octahydroxy silsesquioxane

In 100 mL of ethanol, 10.5 g of triethoxysilane was put, and then the resulting mixture was stirred for 30 minutes. Then, 6 g of 0.5 M HCl solution was put herein, and the resulting mixture was further stirred for 6 hours. After completion of stirring, the solution was gelated without contact with outdoor air for two days at normal temperature.

Next, the gelated solution was allowed to stand for two days in an oven at 80°C, and ethanol and moisture evaporated to give white powder. The white powder was pyrolyzed for 1 hour in an argon atmosphere (flow rate = 100 mL/min) at 900°C to give silicon oxide (SiOₓ).

### (Preparation of silicon oxide carbon composite material)

In 20 mL of tetrahydrofuran (THF), 1 g of the silicon oxide powder obtained in Comparative Example 1 and 0.4 g of petroleum pitch (softening point: 250°C, Mitsubishi Chemical Corporation) were put, and then the resulting mixture was stirred for 30 minutes. Next, the solution was continuously stirred to evaporate THF to give powder.

The powder was pyrolyzed for 1 hour in an argon atmosphere (flow rate = 100 mL/min) at 900°C to give silicon oxide carbon material (21) coated with a carbon-based material.

### (Fabrication of an anode body)

Operations were performed in a manner similar to the operations in Example 1 except that silicon oxide carbon composite materials (15) to (20) obtained according to preparation of silicon oxide carbon composite material described above and silicon oxide (21) were used.

### Comparative Example 2

### (Preparation of SiO₂)

Into a 200 mL flask, 30.0 g of ethanol (guaranteed reagent, made by Wako Pure Chemical Industries, Ltd.) and 48.4 g of tetraethoxysilane (3 N, made by Kanto Chemical Co., Inc.) were charged, and the resulting mixture was stirred at room temperature. Further, 16.8 g of 1 mol/L hydrochloric acid aqueous solution was added dropwise thereto, and then the resulting mixture was stirred until the mixture was gelated in an oil bath at 60°C. The gel obtained was broken with a dispensing spoon, and dried under reduced pressure to give 13.8 g of SiO₂.

### (Preparation of SiO₂-graphite)

Then, 1.0 g of SiO₂ obtained in preparation of SiO₂ and 1.0 g of graphite (CGB-10, made by Nippon Graphite Industries, ltd.) were put in an agate mortar, and mixed with a pestle. The resulting mixture was treated in a manner similar to the operations in Example 1 to give SiO₂-graphite composite material (22).

The results of a small-angle X-ray scattering pattern are shown in Figure 2 with regard to the composite material.

The results of elemental analyses and the results of evaluation of characteristics of batteries fabricated adopting the anode prepared using each anode active material in Examples 1 to 5 and Comparative Examples 1 and 2 according to the invention are as shown in Table 1.

**Table 1**

**Table 1**

| | Compound | Pyrolysis temperature °C | I_{D}/I_{G} ratio | Elemental analysis (mole ratio) | | | Initial charging capacity mAh/g | Discharging capacity at 50^{th} cycle mAh/g | Capacity maintenance ratio % |
|---|---|---|---|---|---|---|---|---|---|
| | | | | Si | C | O | | | |
| Example 1 | 15 | 1,000 | 3.2 | 1.0 | 4.2 | 1.7 | 1,000 | 420 | 42 |
| Example 2 | 17 | 1,000 | 3.0 | 1.0 | 3.6 | 1.7 | 1,010 | 470 | 46 |
| Example 3 | 18 | 1,200 | 3.3 | 1.0 | 3.9 | 1.6 | 1, 020 | 510 | 50 |
| Example 4 | 19 | 1,300 | 3.0 | 1.0 | 4.5 | 1.5 | 980 | 540 | 55 |
| Example 5 | 20 | 1,400 | 3.0 | 1.0 | 3.7 | 1.4 | 860 | 430 | 50 |
| Comparative Example 1 | 21 | 1,000 | - | - | - | - | 500 | 100 | 20 |
| Comparative Example 2 | 22 | 1,000 | - | 1.0 | 1.0 | 0.9 | 1,700 | 100 | 6 |

The results described above indicate that all of the silicon oxide-based composite materials prepared from polysilsesquioxane-based organic silicon compounds used in the invention have higher capacity in both the initial capacity and the discharging capacity at the 50^{th} cycle, a lower decrease in the capacity and higher capacity maintenance ratios in comparison with the hitherto-known carbon-based anode active materials, and therefore the anode active materials according to the invention can be evaluated to be endurable to practical use as the anode material.

Moreover, when the characteristics of the batteries fabricated adopting the anodes using the hitherto-known silicon oxide-based anode active materials as shown in Comparative Examples 1 and 2 are compared with the characteristics of the batteries prepared under conditions identical with the conditions on the anodes fabricated adopting the anode active materials according to the invention, while high values are shown in the initial discharging capacity, the capacity rapidly decreases, and the capacity becomes lower in comparison with the products prepared using the carbon-based anode active materials, or the like, and therefore Comparative Examples 1 and 2 show the anode active materials that cannot demonstrate characteristics as in the hitherto-known batteries as the battery characteristics.

Furthermore, when the products in Examples in which the silicon oxide-based composite material obtained by pyrolyzing polysilsesquioxane was applied as the anode active materials according to the invention are compared with the product in Comparative Example 1 in which the composite material between silicon oxide and carbon in the composition similar to the composition in the invention was used as the anode active material, the batteries having initial capacity as high as 1. 5 times or more can be constituted, and as observed in the discharging capacity at the 50^{th} cycle, the anode active material according to the invention demonstrates high capacity even with a decrease in the capacity, and excellent results are obtained in the capacity maintenance ratios, and therefore capability of obtaining the products having high capacity and a stable battery life is shown.

As described above, as shown in Examples 1 to 5, all of the anode active materials according to the invention demonstrate excellent capacity of a substantially identical degree, and have high capacity maintenance ratios, and as is different from an anode active material in which silicon oxide and a carbon material are merely uniformly mixed, the anode active materials according to the invention can be presumed to be in a state in which silicon oxide and the carbon-based material are not separated by volume expansion due to storage and release of lithium and the silicon oxide and the carbon-based material derived from PSQ are interacting, and such a state can be presumed to be resulting from existence of the anode active material in the form of the silicon oxide-based composite in which the surface of silicon oxide is uniformly coated with the carbon-based material.

### Industrial Applicability

An anode active material for a lithium-ion secondary battery, formation of an anode using the same, and use of the anode for a lithium-ion secondary battery according to the invention allow obtaining of a lithium-ion secondary battery having excellent capacity, excellent charging and discharging characteristics and cycle characteristics. The invention is a useful technology, for example, in a battery field, in particular, in a secondary battery field.

### Reference Signs List

- 1:: Anode material
- 2:: Separator
- 3:: Cathode material
- Q:: -(SiO₄)- unit
- T:: -SiO₃C- unit
- D:: -Si02C2- unit

## Claims

1. An anode active material comprising a silicon oxide-based composite material obtained by heat-treating an organic silicon compound having polysilsesquioxane structure as represented by formula (1) under an inert gas atmosphere, wherein the silicon oxide-based composite material contains silicon (Si), carbon (C) and oxygen (O) by an elemental analysis, has carbon-silicon oxide nanodomain structure in which scattering is recognized in a region: 0.02 Å⁻¹ < q < 0.2 Å⁻¹ in a spectrum measured by a small-angle X-ray scattering method, has graphite carbon in which scattering is recognized at 1,590 cm⁻¹ (G band/graphite structure) and 1, 325 cm⁻¹ (D band/amorphous carbon) and a peak intensity ratio (I_{D}/I_{G} ratio) of amorphous carbon to crystalline carbon is in a range of 2.0 to 5.0 in a spectrum measured by Raman spectroscopy, and is represented by a general formula SiOₓC_{y} (0.5 < x < 1.8, 1 < y < 5): 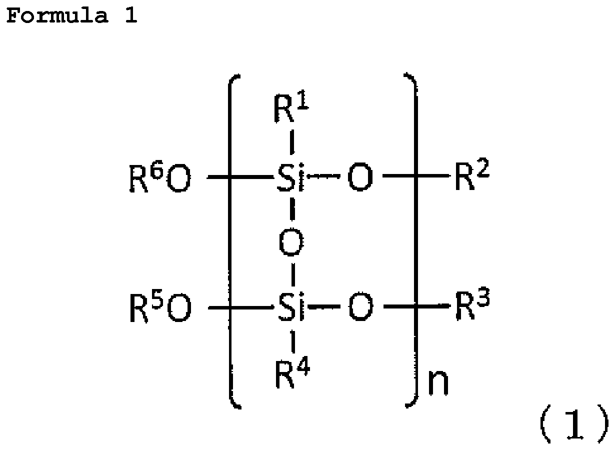 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene; in alkylene in the substituted or unsubstituted arylalkyl, arbitrary hydrogen may be replaced by halogen, and arbitrary -CH₂- may be replaced by -O-, -CH=CH-, cycloalkylene or cycloalkenylene;
R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-; in alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-; and n represents an integer of 1 or more.

2. The anode active material according to claim 1, wherein the silicon oxide-based composite material is obtained by heat-treating polysilsesquioxane represented by formula (2) in a range of 200°C to 2,000°C in a nitrogen or argon gas atmosphere: 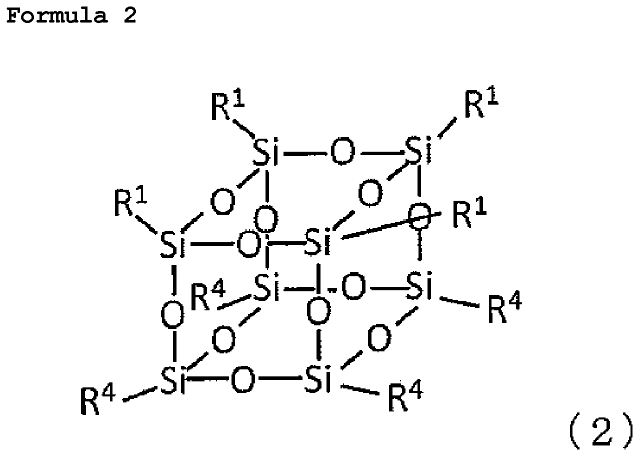 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene; in alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.

3. The anode active material according to claim 1, wherein the silicon oxide-based composite material is obtained by heat-treating polysilsesquioxane represented by formula (3) in a range of 200°C to 2,000°C in a nitrogen or argon gas atmosphere: 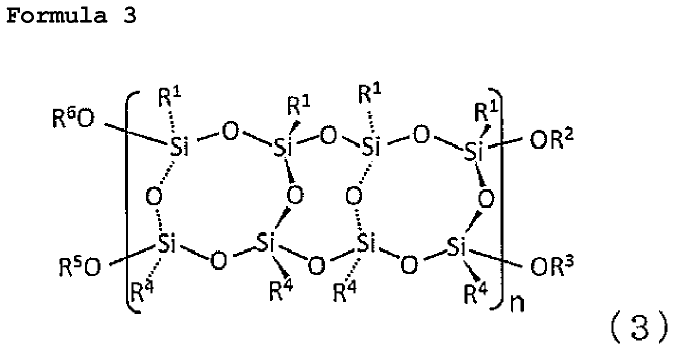 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene; in alkylene in the substituted or unsubstituted arylalkyl, arbitrary hydrogen may be replaced by halogen, and arbitrary -CH₂- may be replaced by -O-, -CH=CH-, cycloalkylene or cycloalkenylene;
R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-; in alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-; and n represents an integer of 1 or more.

4. The anode active material according to claim 1, wherein the silicon oxide-based composite material is obtained by heat-treating polysilsesquioxane represented by formula (4) in a range of 200°C to 2,000°C in a nitrogen or argon gas atmosphere: 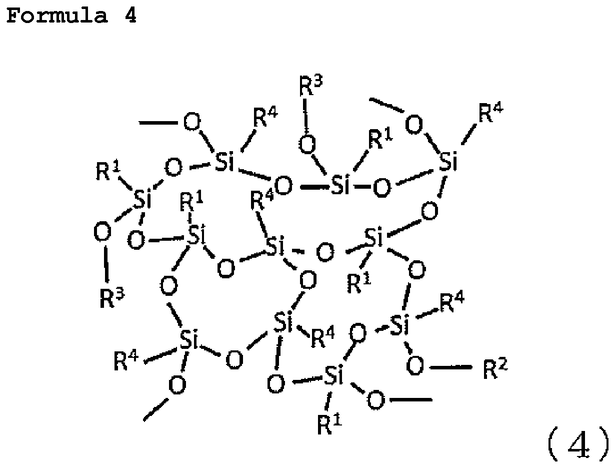 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene; in alkylene in the substituted or unsubstituted arylalkyl, arbitrary hydrogen may be replaced by halogen, and arbitrary -CH₂- may be replaced by -O-, -CH=CH-, cycloalkylene or cycloalkenylene;
R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-; in alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-; and n represents an integer of 1 or more.

5. The anode active material according to claim 1, wherein the silicon oxide-based composite material is obtained by heat-treating a mixture of polysilsesquioxane represented by formulas (2), (3) and (4) in a range of 200°C to 2, 000°C in a nitrogen or argon gas atmosphere.

6. The anode active material according to claim 1, wherein the anode active material further comprises a carbon-based coating layer formed on the silicon oxide-based composite material.

7. The silicon oxide-based anode active material according to claim 1, wherein the anode active material further comprises carbon-based particles dispersed into the silicon oxide-based composite material.

8. An anode, comprising the anode active material according to any one of claim 1 to claim 7.

9. A lithium battery, adopting the anode according to claim 8.

10. A method for producing the anode active material containing the silicon oxide-based composite material according to any one of claim 1 to claim 7, comprising a step for heat-treating polysilsesquioxane in the temperature range of 200 to 2,000°C under an inert atmosphere.

11. The method for producing the anode active material according to claim 10, wherein the polysilsesquioxane has one of structure selected from formulas (2), (3) and (4) or a derivative thereof and a mixture thereof: 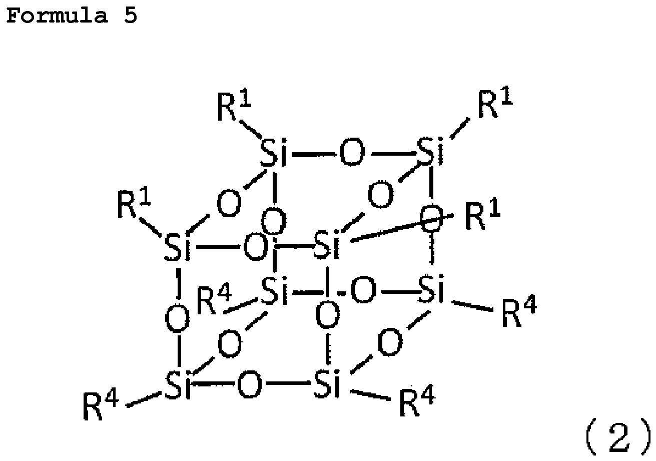 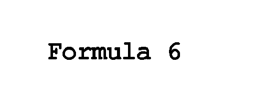 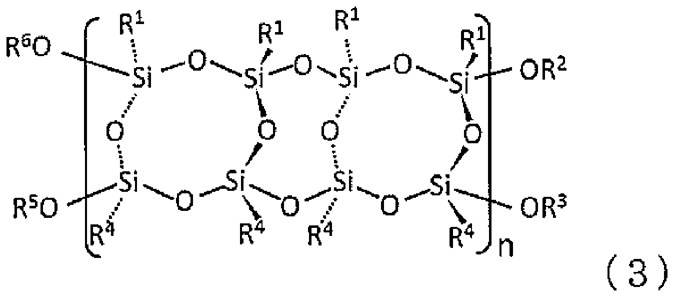 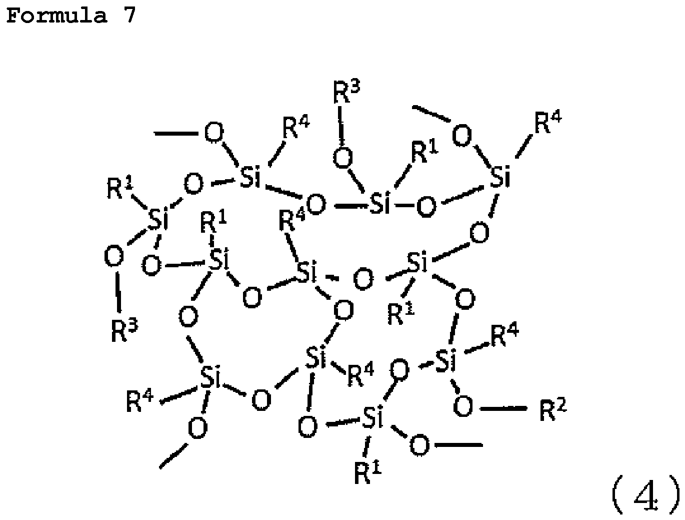 wherein, R¹ and R⁴ each are a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene or cycloalkenylene; in alkylene in the substituted or unsubstituted arylalkyl, arbitrary hydrogen may be replaced by halogen, and arbitrary -CH₂- may be replaced by -O-, -CH=CH-, cycloalkylene or cycloalkenylene; and n represents an integer of 1 or more;
R², R³, R⁵ and R⁶ are a hydrogen atom or a group selected from the group of substituted or unsubstituted alkyl having 1 to 45 carbons, the group of substituted or unsubstituted aryl and the group of substituted or unsubstituted arylalkyl, however, in the alkyl having 1 to 45 carbons, arbitrary hydrogen may be replaced by halogen, and arbitrary -CH₂- may be replaced by -O-, -CH=CH-, cycloalkylene, cycloalkenylene or -SiR¹₂-; in alkylene in the substituted or unsubstituted arylalkyl, arbitrary hydrogen may be replaced by halogen, and arbitrary -CH₂- may be replaced by -O-, -CH=CH-, cycloalkylene, cycloalkenylene or -SiR¹₂-; and n represents an integer of 1 or more.

12. The method for producing the anode active material according to claim 10, wherein the polysilsesquioxane is obtained by allowing a sol-gel reaction of a silane compound represented by chemical formula 5 in the presence of an acid catalyst:
R¹⁰Si(R⁷)(R⁸)(R⁹) (5)
wherein, R⁷, R⁸ and R⁹ are each independently hydrogen, halogen, a hydroxyl group or an alkyloxy group having 1 to 4 carbons, and formula R¹⁰ is a group selected from the group of substituted or unsubstituted alkyl having 1 to 45 carbons, the group of substituted or unsubstituted aryl and the group of substituted or unsubstituted arylalkyl , however, in the alkyl having 1 to 45 carbons, arbitrary hydrogen may be replaced by halogen, and arbitrary -CH₂- may be replaced by -O-, -CH=CH-, cycloalkylene or cycloalkenylene; in alkylene in the substituted or unsubstituted arylalkyl, arbitrary hydrogen may be replaced by halogen, and arbitrary -CH₂- may be replaced by -O-, -CH=CH-, cycloalkylene or cycloalkenylene.
